(19) Europäisches Patentamt
European Patent Office
Office européen des brevets

(11) **EP 0 948 760 B1**

(12) **FASCICULE DE BREVET EUROPEEN**

(45) Date de publication et mention de la délivrance du brevet:
**31.07.2002 Bulletin 2002/31**

(21) Numéro de dépôt: **98951539.0**

(22) Date de dépôt: **23.10.1998**

(51) Int Cl.[7]: **G05D 1/03**

(86) Numéro de dépôt international:
**PCT/FR98/02270**

(87) Numéro de publication internationale:
**WO 99/22281 (06.05.1999 Gazette 1999/18)**

(54) **PROCEDE D'ETALONNAGE DE LA POSITION ET DE L'ORIENTATION D'ORIGINE D'UNE OU PLUSIEURS CAMERAS MOBILES**

VERFAHREN ZUR MESSUNG DER POSITION UND DER AUSRICHTUNG VON EINER ODER MEHREREN BEWEGTEN KAMERAS

METHOD FOR CALIBRATING THE INITIAL POSITION AND THE ORIENTATION OF ONE OR SEVERAL MOBILE CAMERAS

(84) Etats contractants désignés:
**DE ES FR GB IT SE**

(30) Priorité: **24.10.1997 FR 9713375**

(43) Date de publication de la demande:
**13.10.1999 Bulletin 1999/41**

(73) Titulaire: **COMMISSARIAT A L'ENERGIE ATOMIQUE**
**75015 Paris (FR)**

(72) Inventeurs:
- **ARNOUL, Patrick**
  **F-78720 Dampierre en Yvelines (FR)**
- **GUERIN, Jean-Pierre**
  **F-91400 Orsay (FR)**
- **LETELLIER, Laurent**
  **F-92260 Fontenay aux Roses (FR)**
- **VIALA, Marc**
  **F-78280 Guyancourt (FR)**

(74) Mandataire: **Ilgart, Jean-Christophe et al**
**c/o Société Brevatome,**
**3, rue du Docteur Lanceraux**
**75008 Paris (FR)**

(56) Documents cités:
**WO-A-94/29774**
**FR-A- 2 749 419**
**FR-A- 2 760 277**
**US-A- 5 285 397**

- **M. A. Abidi, T. Chandra, "Pose estimation for camera calibration and landmark tracking" Proceedings of the international conference on robotics and automation, US, Los Alamitos, 13 May 1990, pages 420-426, XP000139944**
- **D. Oberkampf, D.F. DeMenthon, L.S. Davis, "Iterative pose estimation using coplanar feature points" Computer Vision and Image Understanding, vol. 63, no. 3, 1 May 1996, pages 495-511, XP000597554**
- **R. Horaud et al.,"An analytic solution for the perspective 4-point problem", Computer vision graphics and image processing, vol. 47, no.1, 1 July 1989, pages 33-44, XP000086842**
- **G. He, K. Novak, W. Feng, "Stereo Camera System Calibration with Relative Orientation Constraints"Proceedings of the SPIE,SPIE, Bellingham, VA,US, vol. 1820, 15 November 0992, pages 2-8, XP002050119**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 948 760 B1

Printed by Jouve, 75001 PARIS (FR)

## Description

L'invention a trait à un procédé d'étalonnage de la position et de l'orientation de plusieurs caméras mobiles et à son application à la mesure d'objets fixes.

Elle peut trouver diverses applications en prenant au moins une image de ces objets par les caméras et en calculant leur position d'après leur trace sur les images prises et la position de la caméra.

Un domaine où il est utile d'étalonner les positions et orientations de caméras est la reconnaissance et le recensement de panneaux routiers observés successivement par au moins une caméra montée sur un véhicule circulant sur la route, afin de créer une base de données de conduite automatique. La position du véhicule peut être estimée périodiquement par un système GPS de satellites géostationnaires et, entre deux estimations, par un système inertiel. Cela est décrit dans le document de G. He, K. Novak, W. Feng, "Stereo Camera System Calibration with Relative Orientation Constraints", Proceedings of the SPIE, SPIE, Bellingham, VA, US, voL. 1820, 15 november 0992, pages 2-8.

L'étalonnage de la caméra est fait par l'observation de marques rétro-réfléchissantes extérieures. On citera aussi les documents de M. A. Abidi, T. Chandra, "Pose Estimation for Camera Calibration and Landmark Tracking" Proceedings of the International Conférence on Robotics and Automation, US, Los Alamitos, 13 May 1990, pages 420-426 et R. Horaud et al., "An Analytic Solution for the Perspective 4-point Problem", Computer Vision Graphics and Image Processing, vol. 47, n°1, 1 July 1989, pages 33-44 pour indiquer des procédés d'étalonnage de caméras par des marques extérieures ; le problème inverse de rechercher des positions de points dans l'espace par les positions de leur trace sur la caméra (rétro-projeter) est résolu dans le document D. Oberkampf, D.F. DeMenthon, L.S. Davis, "Iterative Pose Estimation using Coplanar Feature Points" Computer Vision and Image Understanding, vol. 63, n°3, 1 May 1996, pages 495-511 entre autres.

On a proposé deux autres moyens de maîtriser les incertitudes de positionnement de la caméra sur le support mobile qui la transporte : assembler la caméra au support par un dispositif mécanique qui offre une grande précision, ou munir le boîtier de la caméra de repères, le fixer au support par un mécanisme permettant d'ajuster sa position, et effectuer un ajustement de position entre les repères de la caméra et des repères fixes pour aligner le viseur de la caméra avec une direction déterminée sur le support. La première des possibilités de cette alternative nécessite des moyens mécaniques coûteux qui ne permettent pas de régler la position de la caméra sur le support ni de procéder à aucun réglage de position de quelque nature qu'il soit, et le remplacement de la caméra devient difficile ou impossible puisque le système mécanique est adapté à chaque modèle de caméra. L'autre possibilité de l'alternative implique que la caméra est étalonnée en laboratoire pour que ses repères soient tracés correctement d'après la direction du viseur, et interdit de changer les réglages de position de la caméra ultérieurement sous peine de devoir recommencer la procédure d'étalonnage pour obtenir de nouveaux repères.

Dans l'art antérieur, une caméra unique est généralement employée, et parfois une pluralité de caméras fixées à un support commun, mais ce dernier agencement est souvent trop peu souple pour reconnaître commodément certains objets ; l'invention, définie à la revendication 1, permet au contraire de procéder à des reconnaissances d'environnement et d'objets par des images partielles prises par des caméras mutuellement mobiles.

L'invention sera maintenant décrite en détail à l'aide des figures suivantes :

- la figure 1 est une vue schématique et générale des éléments qui interviennent dans la localisation de la position et de l'orientation initiales de la caméra à l'aide d'une mire ;
- la figure 2 illustre la technique de recherche des traces des marques de la mire sur l'image prise par la caméra ;
- les figures 3 et 4 illustrent une modélisation d'une trace de marque sur l'image ;
- la figure 5 est une représentation géométrique d'explication du procédé de localisation et d'orientation de la caméra ;
- et la figure 6 illustre une façon de mettre en oeuvre l'invention.

Rappelons tout d'abord que l'allure d'une image d'un objet visé par la caméra dépend de onze paramètres : les six paramètres extrinsèques de la caméra, c'est-à-dire ses coordonnées d'orientation et de position par rapport à l'objet et au moins cinq paramètres intrinsèques, à savoir deux coordonnées qui définissent la position du centre optique sur le capteur de la caméra, deux valeurs qui tiennent compte de la distance focale de l'objectif et au moins un facteur de distorsion radiale. Ces paramètres intrinsèques peuvent être déterminés par des étalonnages connus qui sont effectués dès que les éléments de la caméra ont été assemblés ; ils restent alors invariables. La localisation de la caméra est en réalité liée à la détermination de ses paramètres extrinsèques. Elle doit être faite quant la caméra est montée sur son support, à chaque fois qu'elle est démontée et remontée ou que sa position est ajustée sur le support, et en pratique de temps à autre. Une mire fixe est employée pour cela. On détaille ci-après la méthode de calcul des paramètres extrinsèques.

La localisation monoculaire mise en oeuvre pour obtenir les paramètres extrinsèques d'une caméra dans ce

procédé repose sur l'exploitation d'une mire de dimensions connues et d'une unique image prise par la caméra représentant cette mire. Certaines méthodes de résolution connues sont analytiques et imposent de résoudre un système d'équations non linéaires pour déterminer les positions des repères ou des marques de la mire à partir de leur image. Elles sont rapides mais sensibles aux bruits de mesure et exigent un plus grand nombre de marques d'identification.

Une autre catégorie est constituée par les résolutions itératives, dans lesquelles la position des repères est estimée puis corrigée pour minimiser un critère d'erreur entre les images enregistrées par la caméra et les images qui seraient obtenues avec la position estimée des repères. Ces résolutions sont précises, peu sensibles aux bruits de mesure et permettent d'exploiter un nombre variable de repères, mais elles présentent l'inconvénient que la convergence peut être assez lente et que la première estimation doit être proche de la solution, faute de quoi la convergence n'est plus assurée.

Un dispositif inverse de localisation d'un objet porteur de marques de repérage est décrit dans l'article « Model-based object pose in 25 lines of code » par DeMenthon et Davis, paru dans International Journal of Computer Vision, vol.15, p.123-141, 1995, et consiste à obtenir une première estimation analytique de la position des repères par un algorithme approximatif mais simple à utiliser, puis à corriger cette estimation initiale de position par un processus itératif dans lequel les estimations de position des repères sont projetées sur l'image prise par la caméra avant d'appliquer l'algorithme approximatif à ces projections pour donner de nouvelles estimations de position des repères plus précises que les précédentes.

On propose ici un procédé de localisation qui appartient à la famille des méthodes optiques monoculaires et comprend l'utilisation d'un procédé de résolution itératif en utilisant un premier algorithme estimateur de position très proche de cet article ; ce procédé se distingue du précédent en particulier par un meilleur algorithme d'estimation finale, moins sensible aux bruits de mesure, par une étape particulière d'amélioration de la détermination de la position des repères sur l'image, ainsi que par une nature des repères qui permet de satisfaire à l'exigence de précision dans la détermination finale de la position de l'image.

L'algorithme final d'estimation tridimensionnelle est réalisé à l'aide d'un calcul de moindres carrés non linéaires avec injection des facteurs de qualité issus de l'étape d'amélioration de la position bidimensionnelle des traces des marques dans l'image. Ce calcul pourrait être avantageusement remplacé par un filtre de Kalman dont la stabilité numérique est assurée avec des opérations en virgule flottante à simple précision (32 bits). Le calcul des moindres carrés non linéaires impose des opérations à double précision (64 bits) qui ne sont pas disponible sur tous les matériels informatiques, notamment les systèmes embarqués à DSP (Processeur de traitement de signal numérique).

On notera que la demande de brevet français 97 02426 non encore publiée décrit un procédé analogue à celui-ci pour déterminer la position et l'orientation d'objets mobiles, porteurs de marques de repérage, dans le champ de vision d'une caméra fixe et de position connue.

La figure 1 représente une mire 1 qui porte des marques 3 sur deux faces planes formant un dièdre et tournées vers une caméra 4 ; les marques 3 peuvent consister en des motifs de petite surface tels que des points de couleur ou qui réfléchissent la lumière environnante. Ces motifs sont avantageusement d'un nombre supérieur à trois et non coplanaires, mais une étape supplémentaire d'initialisation de la localisation tridimensionnelle par des valeurs a priori permet de n'avoir recours qu'à trois marques de repérage en levant les ambiguïtés pouvant apparaître. En effet, dans les applications de localisation tridimensionnelle de grande précision, on connaît bien souvent de bonnes valeurs approchées du résultat final qui permettent l'initialisation du processus. Les motifs sont d'ailleurs avantageusement plus nombreux encore si on veut obtenir une meilleure précision. Il n'est pas indispensable que les marques 3 soient à une orientation définie et immuable par rapport à la caméra 4, mais elles peuvent au contraire être présentées obliquement à elle sans que la précision de détection soit compromise, ce qui n'impose pas de placer la caméra 4 avec trop de contraintes.

Ces marques passives peuvent être préférées aux marques lumineuses, généralement employées dans la technique et qui sont plus facilement visibles mais dont les contours sont moins nets, ce qui interdit de bien profiter de l'algorithme d'amélioration d'estimation de position décrit plus loin.

La première étape du procédé de localisation consiste à chercher la trace des marques 3 sur l'image prise par la caméra 4. Il s'agit d'une étape d'identification d'imagettes ou portions d'image contenant chacune la trace d'une des marques 3. La figure 2 montre qu'on procède par une corrélation de l'image 10 de la caméra 4 avec une image 9 d'étalonnage prise précédemment. Si on a constaté que la trace d'une des marques 3 était incluse dans le périmètre d'une portion ou imagette de référence 11 de l'image d'étalonnage 9, le programme de localisation crée successivement des imagettes 12 de même périmètre à des coordonnées x et y sur l'image 10 et calcule la corrélation C de l'intensité lumineuse des points des imagettes 11 et 12 selon la formule suivante (1) :

$$C(x, y) = \frac{Cov(M_o, M_k)}{\sigma(M_o)\sigma(M_k)} = \frac{E(M_oM_k) - E(M_o)E(M_k)}{\sqrt{E(M_o^2) - E(M_o)^2}\sqrt{E(M_k^2) - E(M_k)^2}} \quad (1)$$

où cov est la covariance, E est l'espérance mathématique et σ l'écart-type de l'intensité lumineuse. $M_o$ et $M_k$ représentant les contenus ou motifs lumineux des imagettes 11 et 12. Ce calcul est repris pour toutes les positions de l'imagette 12 en faisant varier x et y. Une table de corrélation de l'image 10 est alors obtenue, dont les points sont affectés d'un nombre compris entre -1 et +1, où -1 représente une anti-corrélation entre les motifs $M_o$ et $M_k$ pour les coordonnées x et y considérées, 0 une absence de corrélation et +1 une corrélation parfaite. Cette dernière situation apparaît quand l'imagette 12 est identique à l'imagette 11 de référence : la corrélation sert précisément à repérer les endroits de meilleure corrélation avec l'imagette 11 sur l'image 10 au moyen d'une lecture de la table de corrélation ; il est alors possible d'isoler un certain nombres d'imagettes 12 sur l'image 10, qui contiennent chacune la trace 13 d'une des marques 3 de l'objet visé. L'imagette 11 de référence peut être unique pour plusieurs imagettes 12 si les marques 3 sont identiques ; sinon, une imagette 12 est associée à une imagette 11 de référence respective.

Ce procédé présente le grand avantage de permettre de retrouver les traces des marques 3 même quand des variations de luminosité existent entre les marques 3 ou entre l'image 10 et l'image d'étalonnage 9.

Certaines précautions doivent cependant être prises pour rendre le procédé plus intéressant et plus sûr. Il faut en effet admettre que ces calculs de corrélation sont longs et coûteux. C'est pourquoi ils sont entrepris en réalité sur des images réduites, présentant simplement une sélection des points (pixels) de l'image originale. Du tableau de corrélation réduit ainsi obtenu on sélectionne les points correspondant à des imagettes candidates en plus grand nombre que les imagettes 12 recherchées. Les imagettes candidates sont l'objet d'une seconde sélection en réalisant une corrélation de vérification sur des imagettes candidates complètes, c'est-à-dire dans lesquelles on a réintégré tous les points écartés en construisant l'image réduite. Les imagettes 12 finalement retenues sont celles qui possèdent la meilleure corrélation de vérification avec l'imagette 11 de référence. Ces précautions permettent de se prémunir contre les risques d'erreur attachés aux conditions concrètes d'exploitation, où des lumières parasites ou d'autres artefacts peuvent induire le système en erreur et le pousser à identifier des traces 13 à ces endroits plutôt qu'aux véritables. De plus, les corrélations de vérification peuvent être calculées plusieurs fois pour chacune des imagettes 12, en les déplaçant à chaque fois dans le périmètre d'une fenêtre 14 de dimensions prédéterminées construite autour de chacune des imagettes candidates. C'est bien sûr la position de meilleure corrélation dans la fenêtre 14 qu'on retient pour définir l'imagette 12. Le risque de tronquer la trace 13 en la cadrant mal dans l'imagette 12 est alors très réduit.

Un élément important bien que facultatif consiste à estimer avec une grande précision la position des traces 13 des marques 3 sur les imagettes 12 : le procédé qui est proposé permet de faire une localisation sous-pixellique de cette position, c'est-à-dire avec une précision meilleure que la largeur d'un point de l'image. Il est alors possible d'obtenir des résultats de localisation satisfaisants, même avec une caméra 4 à faible résolution, moins coûteuse et dont l'exploitation des images est plus rapide. Il serait possible de se fonder sur le calcul de corrélation entre l'imagette 12 de la trace 13 et une image primitive telle que l'imagette 11 pour, par exemple, calculer la position du centre de la trace 13 sur l'imagette 12. Mais ce genre de méthode devient inopérant quand la mire 1 est vue sous une autre incidence que pendant la prise d'image d'étalonnage, qui les déforme sur l'imagette 12. C'est pourquoi il est proposé de modéliser les traces 13 sur l'imagette 12 par une formule telle que la suivante (2):

$$I(x, y) = a + bx + cy + d \exp\left(\frac{1}{2(1 - r_{xy}^2)}\left(\frac{(x - m_x)^2}{\sigma_x^2} + \frac{(y - m_y)^2}{\sigma_y^2} - \frac{(x - m_x)(y - m_y)}{\sigma_x\sigma_y}\right)\right) \quad (2)$$

où I est l'intensité lumineuse sur l'imagette 12, a, b, c et d sont des constantes dont les trois premières servent à estimer l'intensité lumineuse du fond de l'imagette 12, la dernière l'intensité lumineuse globale de la trace 13 ; $m_x$, $m_y$ expriment les coordonnées du centre de la trace 13, $\sigma_x$ et $\sigma_y$ ses largeurs dans des axes principaux qui peuvent être obliques (d'angle θ) par rapport aux axes principaux de l'imagette 12, et $r_{xy}$ exprime l'étalement de la trace.

D'un point de vue mathématique, a, b et c sont des coefficients d'un plan et d la hauteur d'une fonction gaussienne de section bidimensionnelle elliptique dont $m_x$ et $m_y$ sont les moyennes, $\sigma_x$ et $\sigma_y$ les écarts-types et $r_{xy}$ la corrélation. Les figures 3 et 4 en donnent une représentation graphique.

On voit que ce modèle tient compte du rétrécissement de la trace 13 sur l'imagette 12 consécutif à l'éloignement de la marque 3 et de sa déformation consécutive à l'obliquité de la mire 1. Si on appelle $\hat{I}_{(xy)}$ l'intensité lumineuse mesurée sur les points de l'imagette 12, le travail consiste à minimiser la fonction $C_{min}$ de la formule (3) :

$$C_{min}(a, b, c, d, m_x, m_y, \sigma_x, \sigma_y, r_{xy}) = \sum_{x,y \in I} \left(I(x, y) - \bar{I}(x, y)\right)^2 \quad (3)$$

en faisant varier les variables de cette fonction, c'est-à-dire les paramètres de modélisation, pour que les intensités lumineuses données par celle-ci coïncident au mieux avec les valeurs mesurées. Une modélisation précise de la trace 13 est alors obtenue : on peut en particulier en déduire le centre par les valeurs de $m_x$ et $m_y$ et par conséquent, avec un étalonnage préliminaire connu de la caméra 4, la direction de la marque 3 associée à l'imagette 12 considérée par rapport à la caméra 4.

Le modèle donné précédemment convient pour des marques 3 circulaires, mais il est facile de le transposer à des marques différentes de forme simple.

Il reste maintenant à déterminer la position de la caméra 4 par rapport aux marques 3. La figure 5 permettra de comprendre les explications qui suivent.

En supposant que les distorsions géométriques causées par l'objectif de la caméra 4 aient été corrigées notamment par le facteur de distorsion radiale des paramètres intrinsèques de la caméra, ce qui peut aussi être fait par un étalonnage préliminaire de la caméra 4 par photogrammétrie, le point P au centre d'une marque 3 se trouve sur une ligne L de projection passant par le centre Pp de la trace correspondante 13 sur l'image 10 et par un foyer F. On appelle i, j et k les axes d'un repère de caméra dont le foyer F est l'origine, l'axe k étant perpendiculaire à l'image 10. Tous les points de l'espace perçus par la caméra 4 se projettent sur l'image 10 par une ligne passant par le foyer F : cette projection convergente est appelée « en perspective ». La position des points Pp, centres des traces 13, est donc prévisible quand la mire 1 occupe une position donnée dans le champ de la caméra 4 ; le problème consiste à retrouver les relations de rétro-projection qui font passer des points Pp aux points P. Mais on constate que les relations rigoureuses de rétro-projection, obtenues en inversant les relations de projection permettant de calculer les coordonnées des points Pp à partir des coordonnées des points P, ne peuvent pas être exploitées facilement car elles ne consistent pas en un système d'équations linéaires.

C'est pourquoi on préconise de recourir à une première évaluation de la position des points P ; cette première évaluation est approximative mais elle peut être obtenue facilement et permet ensuite d'appliquer un procédé de convergence vers la solution réelle. Le principe retenu consiste à supposer que les points P se projettent sur l'image 10 en deux étapes, d'abord par une projection orthogonale sur un plan intermédiaire $\Pi$ parallèle au plan de l'image 10, en un point P', puis par une projection en perspective de ce point P' vers le foyer F, qui donne un point Pp' sur l'image 10. Ce point de projection fictive est à côté du point Pp de projection réelle. La première évaluation de la position des points P consiste à appliquer une rétro-projection, inverse de la projection fictive qu'on vient de décrire, aux points Pp de l'image 10 : les points ainsi obtenues sont notés °P.

Ce principe étant exposé, il faut détailler plus précisément les calculs entrepris.

La situation de la mire 1 peut être représentée par une rotation R et une translation t conformes aux matrices suivantes (4), qui font passer du repère de la vidéo-caméra 4, défini plus haut, à un repère fixe, lié à la mire 1 :

$$t = (t_x, t_y, t_z)^T \qquad (4)$$

$$R = \begin{pmatrix} i_x & i_y & i_z \\ j_x & j_y & i_z \\ k_x & k_y & k_z \end{pmatrix} = \begin{pmatrix} i^T \\ j^T \\ k^T \end{pmatrix}$$

où $t_x$, $t_y$ et $t_z$ sont des coordonnées de translation exprimées dans les axes i, j et k du repère de la caméra 4 et *i*, *j* et *k* sont les vecteurs directeurs du repère de la caméra 4 exprimés dans le repère de la mire 1.

Le plan $\Pi$ est choisi tel que l'origine O du repère de la mire 1 lui appartienne, ce qui implique que le foyer F est distant du plan $\pi$ de la grandeur $t_z$.

Si on appelle $°_x$, $°_y$ et $°_z$ les coordonnées du point P dans le repère de la mire 1 et $\bar{u}$ et $\bar{v}$ les coordonnées du point P'p sur l'image 10, on peut obtenir les relations suivantes (5) :

$$\frac{i.({}^\circ x, {}^\circ y, {}^\circ z)^T + t_x}{t_z} = \bar{u}$$

$$\frac{j.({}^\circ x, {}^\circ y, {}^\circ z)^T + t_y}{t_z} = \bar{v} \qquad (5)$$

Ces équations peuvent être généralisées à un nombre n de points P de la mire 1 de la manière suivante (6) :

$$A\begin{pmatrix} I_1 \\ I_2 \\ I_3 \\ I_4 \end{pmatrix} = \bar{u}$$

$$A\begin{pmatrix} J_1 \\ J_2 \\ J_3 \\ J_4 \end{pmatrix} = \bar{v} \qquad (6)$$

où les notations I, J, A, $\bar{u}$, $\bar{v}$ sont données par les équations que voici (7) :

$$\begin{cases} I1 = i_x / tz \\ I2 = i_y / tz \\ I3 = i_z / tz \\ I4 = t_x / tz \\ J1 = j_x / tz \\ J2 = j_y / tz \\ J3 = j_z / tz \\ J4 = t_y / tz \end{cases}$$

$$A = \begin{pmatrix} {}^\circ x1 & {}^\circ y1 & {}^\circ z1 & 1 \\ \vdots & \vdots & \vdots & \vdots \\ {}^\circ x_n & {}^\circ y_n & {}^\circ z_n & 1 \end{pmatrix} \qquad (7)$$

$$\bar{u} = \begin{pmatrix} \bar{u}_1 \\ \vdots \\ \bar{u}_n \end{pmatrix}$$

$$\bar{v} = \begin{pmatrix} \bar{v}_1 \\ \vdots \\ \bar{v}_n \end{pmatrix}$$

Il s'agit alors de calculer les quantités $I_n$ et $J_n$, ce qui est effectué par les formules suivantes (8) :

$$\begin{pmatrix} I_1 \\ I_2 \\ I_3 \\ I_4 \end{pmatrix} = B\bar{u}'$$

$$\begin{pmatrix} J_1 \\ J_2 \\ J_3 \\ J_4 \end{pmatrix} = B\bar{v}' \qquad (8)$$

où la matrice B est la pseudo-inverse de A, c'est-à-dire que $B = (A^TA)^{-1}A^T$.

Le calcul des paramètres i, j, k et $t_x$, $t_y$, $t_z$ des matrices R et t est alors effectué de façon simple par la succession d'étapes suivantes :

- calcul des normes $n_I = \|(I_1,I_2,I_3)^T\|$ et $n_J = \|(J_1,J_2,J_3)^T\|$ ;
- calcul de la norme moyenne $n=(n_I+n_J)/2$ ;
- calcul de $i=(I_1,I_2,I_3)^T/n_I$ et de $j=(J_1,J_2,J_3)^T/n_J$ ;
- calcul de *k* par le produit vectoriel des vecteurs *i* et *j* ;
- calcul de la composante $t_z=1/n$ ;
- calcul de $t_x=I_4t_z$ et de $t_y=J_4t_z$.

Quand la position des points °P d'estimation de la position des points P a été ainsi obtenue par ces calculs, il convient de la corriger à cause de l'erreur de principe expliquée avec le commentaire de la figure 5. Les points °P sont projetés sur le plan de l'image 10 le long d'une ligne dirigée vers le foyer F. Les coordonnées $\hat{\bar{u}}$ et $\hat{\bar{v}}$ du point de projection °Pp sont données par les formules (9) :

$$\frac{i.({}^\circ x, {}^\circ y, {}^\circ z)^T + t_x}{k.({}^\circ x, {}^\circ y, {}^\circ z)^T + t_z} = \hat{\bar{u}}$$

$$\frac{j.({}^\circ x, {}^\circ y, {}^\circ z)^T + t_y}{k.({}^\circ x, {}^\circ y, {}^\circ z)^T + t_z} = \hat{\bar{v}} \qquad (9)$$

à comparer aux formules précédentes (5) approchées mais plus simples.

L'estimation définitive des paramètres de localisation de la mire 1, c'est-à-dire des valeurs de coefficients des matrices R et t qui donnent la position et l'orientation du repère de la mire 1, est obtenue en minimisant l'erreur quadratique entre les coordonnées $\bar{u}$ et $\bar{v}$ mesurées sur les points Pp de l'image 10 et les coordonnées $\hat{\bar{u}}$ et $\hat{\bar{v}}$ des projections °Pp, calculées par les formules précédentes (9), des points °P. On tient compte des incertitudes sur les coordonnées des points Pp estimés par la modélisation de la trace 13 (ces incertitudes sont représentées par une matrice $\Lambda$ de coefficients qui peuvent être estimés à l'avance). En d'autres termes, on cherche à minimiser la quantité $C_{min}$ donnée par la formule suivante (10) :

$$C_{min}(R, t) = \sum_{i=1}^{n} \left((\bar{u}_i, \bar{v}_i) - (\hat{\bar{u}}_i, \hat{\bar{v}}_i)\right)^T \Lambda^{-1}\left((\bar{u}_i, \bar{v}_i) - (\hat{\bar{u}}_i, \hat{\bar{v}}_i)\right) \qquad (10)$$

On agit par itérations, en déplaçant à chaque fois les points °P en fonction des positions de leurs projections $°P_p$ sur l'image 10, jusqu'à ce que ces projections aient suffisamment convergé vers les centres Pp des traces 13. La localisation de la mire 1 étant connue dans un repère fixe, il est alors possible de connaître celle de la vidéo-caméra 4 dans ce même repère en calculant la transformation inverse.

L'application du principe de localisation de la position d'une caméra utilisée dans l'invention exploite la possibilité d'étalonner la position respective de plusieurs caméras montées sur une tête mobile. Il s'agit de contrôler la géométrie des véhicules (parallélisme des roues) dans un centre de contrôle automobile (cf. Fig.6). le dispositif consiste à équiper les roues 56 du véhicule à contrôler 55 de plaques 54 porteuses de marques rétro-réfléchissantes 57, deux caméras 51 et 52 étant alors placées de part et d'autre et en avant du véhicule. Une technique connue de localisation tridimensionnelle des plaques apparaissant dans le champ de chaque caméra permet de déterminer avec précision la position angulaire de chaque roue 56 par rapport à la caméra 51 ou 52. Il est donc possible de déterminer si les deux roues 56 d'un même côté du véhicule sont parallèles car les plaques de contrôle sont alors dans le champ de la même caméra 51 ou 52 qui fournit le repère.

Afin de contrôler le parallélisme des roues opposées sur un même essieu, il est nécessaire de connaître avec précision la transformation de repère entre les deux caméras. Un premier dispositif consisterait à fixer de manière rigide les deux caméras 51 et 52 à un support transversal et à étalonner la position des caméras 51 et 52 en mettant en oeuvre la technique de ce brevet. Il serait nécessaire de disposer une mire porteuse de marques dans le champ des deux caméras afin de connaître la position de chaque caméra dans le repère de cette mire, et par différence, la transformation de position entre les deux caméras 51 et 52.

Ce dispositif de contrôle de géomérie des véhicules impliquerait une réalisation mécanique rigide et stable, qui sera lourde à installer et encombrante.

On peut avantageusement, selon le dispositif de la figure 6, installer les deux caméras 51 et 52 de part et d'autre du véhicule sur des supports 60 légers et indépendants (trépieds). La caméra 52 est équipée d'une plaque 59 porteuse de marques 58 orientée vers la caméra 51, et une troisième caméra 53 est solidaire du support de la caméra 51 et orientée vers la caméra 52.

La mise en oeuvre de la technique de ce brevet analysant les images de la plaque 59 obtenues par la caméra 53 permet de connaître en permanence (à chaque mesure de parallélisme) la position réelle de la caméra 53 par rapport à la plaque 59. Les deux équipements : caméra 51 associée à la caméra 53 d'une part et caméra 52 et sa plaque 59 porteuse de marques 58 d'autre part, sont préalablement étalonnés en usine à l'aide d'un banc de mesure équipé d'une autre caméra et d'une mire associée pour connaître avec précision leurs paramètres géométriques fixes.

Ainsi avec ce dispositif léger, il sera possible de disposer de la transformation de repère entre la caméra 51

et la caméra 52 nécessaire au contrôle de parallélisme des quatre roues du véhicule en temps réel sur le site de contrôle quelle que soit la position approximative avec laquelle l'opérateur aura placé les trépieds 60.

L'exploitation des images prises par la caméra d'étalonnage 53 est faite de la même manière que précédemment et permet de déduire la position et l'orientation relatives des caméras 51 et 52.

Un tel procédé pourrait être généralisé à tout système comprenant plusieurs caméras d'observation d'un même objet, ou de portions voisines d'un même objet ou d'un même espace, et dont les vues doivent être corrélées entre elles pour les juxtaposer et reconstituer l'objet ou déduire des caractéristiques de l'espace observé.

## Revendications

1. Procédé d'étalonnage, par rapport à une seconde caméra (52), de la position et de l'orientation d'origine d'une première caméra (51), les caméras étant disposées sur des supports indépendants et mobiles (60) dans un environnement, **caractérisé en ce qu'**il consiste à munir la première caméra d'une caméra d'étalonnage (53) et la seconde caméra d'une mire (58) à une position et une orientation connues ; à prendre une image de la mire par la caméra d'étalonnage ; et à analyser l'image de la mire par un système de traitement en relevant des positions de traces ($P_p$) de marques caractéristiques (3) de la mire sur l'image et en déduisant des directions et des éloignements entre les marques caractéristiques et la caméra d'étalonnage, puis une position et une orientation de la caméra d'étalonnage (53) par rapport à la mire, puis de la première caméra (51) par rapport à la seconde caméra (52).

2. Procédé selon la revendication 1, **caractérisé en ce que** la mire (58) comprend au moins trois marques dans le champ de la caméra à étalonner (51), et avantageusement plus de trois marques non coplanaires.

3. Procédé selon l'une quelconque des revendications 1 ou 2, **caractérisé en ce que** la position et l'orientation de la caméra d'étalonnage (53) par rapport à la mire (58) sont déduites sous forme d'une position (t) et d'une orientation (R) de la caméra à étalonner (51) par rapport à un repère lié à la mire.

4. Procédé selon l'une quelconque des revendications 1 à 3, **caractérisé en ce qu'**il consiste à déduire les directions et les éloignements entre les marques caractéristiques et la caméra d'étalonnage (53) en effectuant une rétro-projection des centres des traces des marques caractéristiques (3) de la mire d'abord sur un plan (Π) passant par l'origine du repère de la mire et parallèle au plan de l'image le long de lignes convergeant vers un foyer unique (F), puis dans l'espace, perpendiculairement audit plan parallèle pour obtenir des points de rétro-projection (°P), et ensuite, de façon itérative, une projection des points de rétro-projection (°P) sur le plan de l'image (10) le long de lignes convergeant vers le foyer (F) pour obtenir des points de projection (°Pp), et une correction de position des points de rétro-projection pour minimiser un critère d'estimation d'erreur entre des coordonnées des centres des traces (Pp) des marques caractéristiques (3) et des points de projection (°Pp).

5. Procédé conforme à la revendication 1, **caractérisé en ce qu'**il est appliqué à l'observation du contenu d'un même espace à partir de vues partielles de ce contenu fournies par la première et seconde caméras (51, 52).

6. Procédé selon la revendication 5, **caractérisé en ce qu'**il comporte un calcul d'une relation géométrique entre des portions d'un objet (55) apparaissant respectivement sur les vues partielles.

## Patentansprüche

1. Verfahren zur Messung der Position und der anfänglichen Ausrichtung einer ersten Kamera (51) in Bezug auf eine zweite Kamera (52), wobei die Kameras auf unabhängigen und in einer Umgebung beweglichen Trägern (60) angeordnet sind,
**dadurch gekennzeichnet,**
**dass** es darin besteht, dass man die erste Kamera mit einer Messkamera (53) ausstattet und die zweite Kamera mit einer Visiereinrichtung (58) von bekannter Position und Ausrichtung, dass die Messkamera ein Bild von der Visiereinrichtung aufnimmt, und dass das Bild von der Visiereinrichtung durch ein Verarbeitungssystem analysiert wird, indem Positionen von Spuren ($P_p$) charakteristischer Markierungen (3) in dem Bild gemessen werden und daraus Richtungen und Entfernungen zwischen den charakteristischen Markierungen und der Messkamera, dann eine Position und eine Ausrichtung der Messkamera (53) in Bezug auf die Visiereinrichtung und dann der ersten Kamera (51) in Bezug auf die zweite Kamera (52) abgeleitet werden.

2. Verfahren nach Anspruch 1, **dadurch gekennzeichnet, dass** die Visiereinrichtung (58) wenigstens drei Markierungen im dem Feld der Messkamera (51) umfasst und vorzugsweise mehr als drei nicht-koplanare Markierungen.

3. Verfahren nach einem der Ansprüche 1 oder 2, **dadurch gekennzeichnet, dass** die Position und Ausrichtung der Messkamera (53) abgeleitet wird in Bezug auf die Visiereinrichtung (58) in Form einer Position (t) und einer Ausrichtung (R) der zu messenden Kamera (51) in Bezug auf ein mit der Visiereinrichtung verbundenes Bezugssystem.

4. Verfahren nach einem der Ansprüche 1 bis 3, **dadurch gekennzeichnet, dass** es darin besteht, die Richtungen und die Entfernungen zwischen den charakteristischen Markierungen und der Messkamera (53) abzuleiten, indem man eine Retroprojektion der Zentren der Spuren der charakteristischen Markierungen (3) der Visiereinrichtung vornimmt, zunächst auf eine Ebene ($\Pi$), die durch den Nullpunkt des Bezugssystems der Visiereinrichtung verläuft, parallel zu der Bildebene, längs von in Richtung eines einzigen Brennpunkts (F) konvergierenden Linien, dann in den Raum, senkrecht zu der genannten parallelen Ebene, um Retroprojektionspunkte (°P) zu erhalten, und dann, auf iterative Weise, eine Projektion der Retroprojektionspunkte (°P) auf die Bildebene (10) vornimmt, längs von in Richtung des Brennpunkts (F) konvergierenden Linien, um Projektionspunkte (°$P_p$) zu erhalten, und eine Korrektur der Position der Retroprojektionspunkte vornimmt, um ein Fehlerbewertungskriterium zwischen Koordinaten der Zentren der Spuren ($P_p$) der charakteristischen Markierungen (3) und Projektionspunkten (°$P_p$) zu minimieren.

5. Verfahren nach Anspruch 1, **dadurch gekennzeichnet, dass** es angewendet wird zur Beobachtung des Inhalts eines selben Raums aufgrund partieller Ansichten dieses Inhalts, geliefert durch die erste und zweite Kamera (51, 52).

6. Verfahren nach Anspruch 5, **dadurch gekennzeichnet, dass** es eine Berechnung einer geometrischen Relation zwischen jeweils in den partiellen Ansichten erscheinenden Teilen eines Objekts (55) umfasst.

## Claims

1. Method for calibrating the original position and orientation of a first camera (51) relative to a second camera (52), the cameras being placed on supports (60), which are independent and mobile in an environment, **characterized in that** it consists of providing the first camera with a calibration camera (53) and the second camera with a sight (58) at a known position and orientation, taking an image of the sight by the calibration camera and analyzing the image of the sight by a processing system plotting the positions of the tracks ($P_p$) of the characteristic marks (3) of the sight on the image and deducing therefrom the directions and distances between the characteristic marks and the calibration camera, then a position and orientation of the calibration camera (53) relative to the sight and then the first camera (51) relative to the second camera (52).

2. Method according to claim 1, **characterized in that** the sight (58) comprises at least three marks in the field of the camera (51) to be calibrated and advantageously more than three non-coplanar marks.

3. Method according to either of the claims 1 and 2, **characterized in that** the position and orientation of the calibration camera (53) relative to the sight (58) are deduced in the form of a position (t) and an orientation (R) of the camera (51) to be calibrated with respect to a reference mark linked with the sight.

4. Method according to any one of the claims 1 to 3, **characterized in that** it consists of deducing the directions and distances between the characteristic marks and the calibration camera (52) by carrying out a retroprojection of the centres of the tracks of the characteristic marks (3) of the sight firstly on a plane (II) passing through the origin of the reference mark of the sight and parallel to the plane of the image along lines converging towards a single focus (F), then in space, perpendicular to said parallel plane in order to obtain retroprojection points (°P) and then in iterative manner, a projection of the retroprojection point (°P) on the plane of the image (10) along lines converging towards the focus (F) in order to obtain projection points (°Pp), and a correction of the position of the retroprojection points in order to minimize an error estimation criterion between the coordinates of the centres of the tracks (Pp) of the characteristic marks (3) and the projection points (°Pp).

5. Method according to claim 1, **characterized in that** it is applied to the observation of the content of the same space based on partial views of said content supplied by the first and second cameras (51, 52).

6. Method according to claim 5, **characterized in that** it involves a calculation of a geometrical relationship between

portions of an object (55) appearing respectively on the partial views.

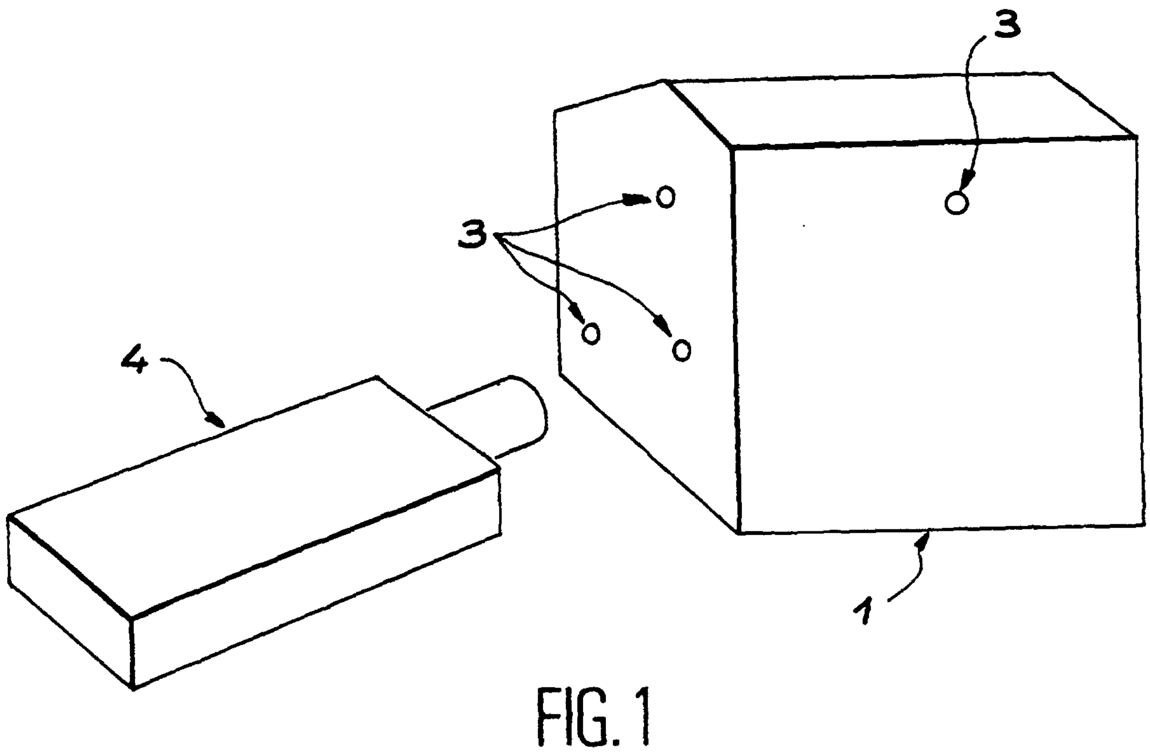


FIG. 1

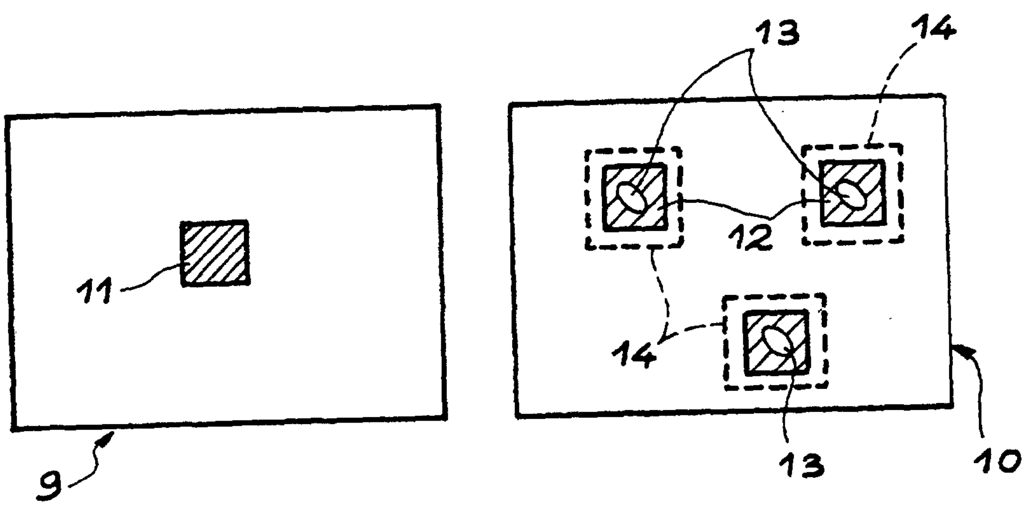


FIG. 2

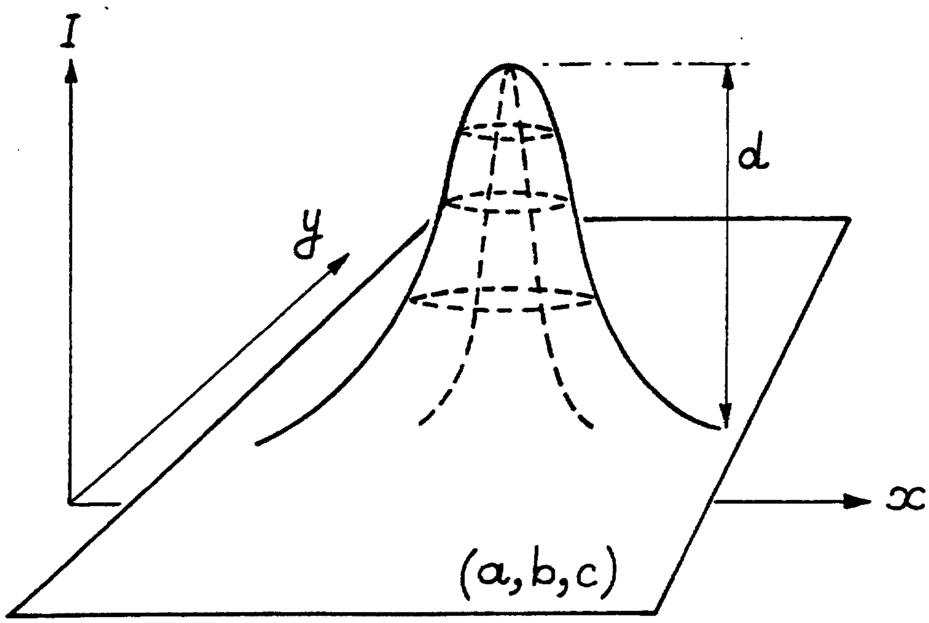
I
d
y
x
(a,b,c)

FIG. 3

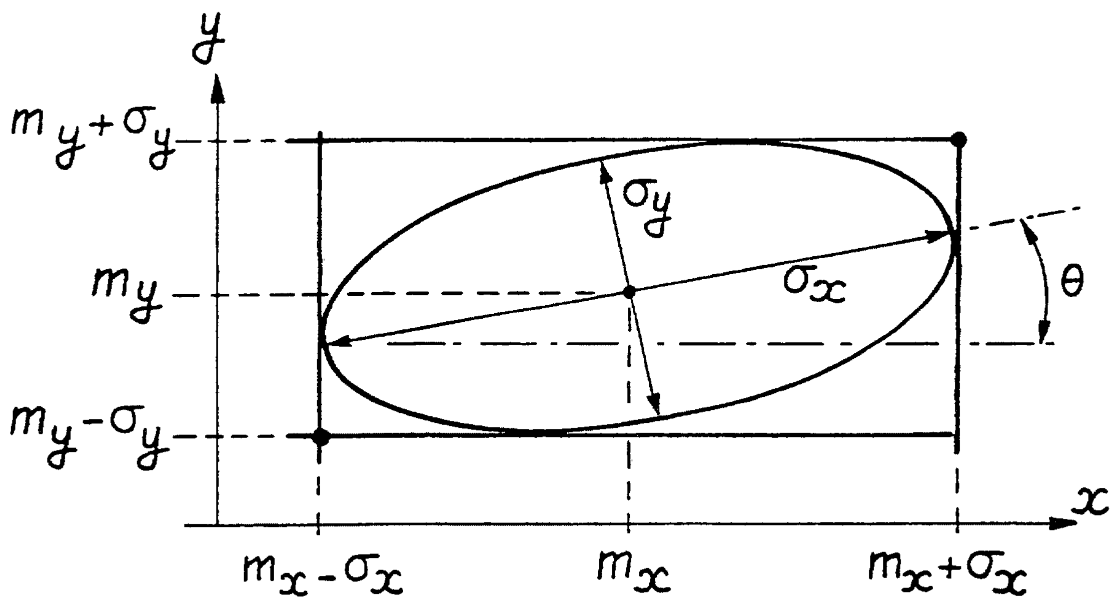
y
$m_y+\sigma_y$
$\sigma_y$
$m_y$
$\sigma_x$
$\theta$
$m_y-\sigma_y$
x
$m_x-\sigma_x$
$m_x$
$m_x+\sigma_x$

FIG. 4

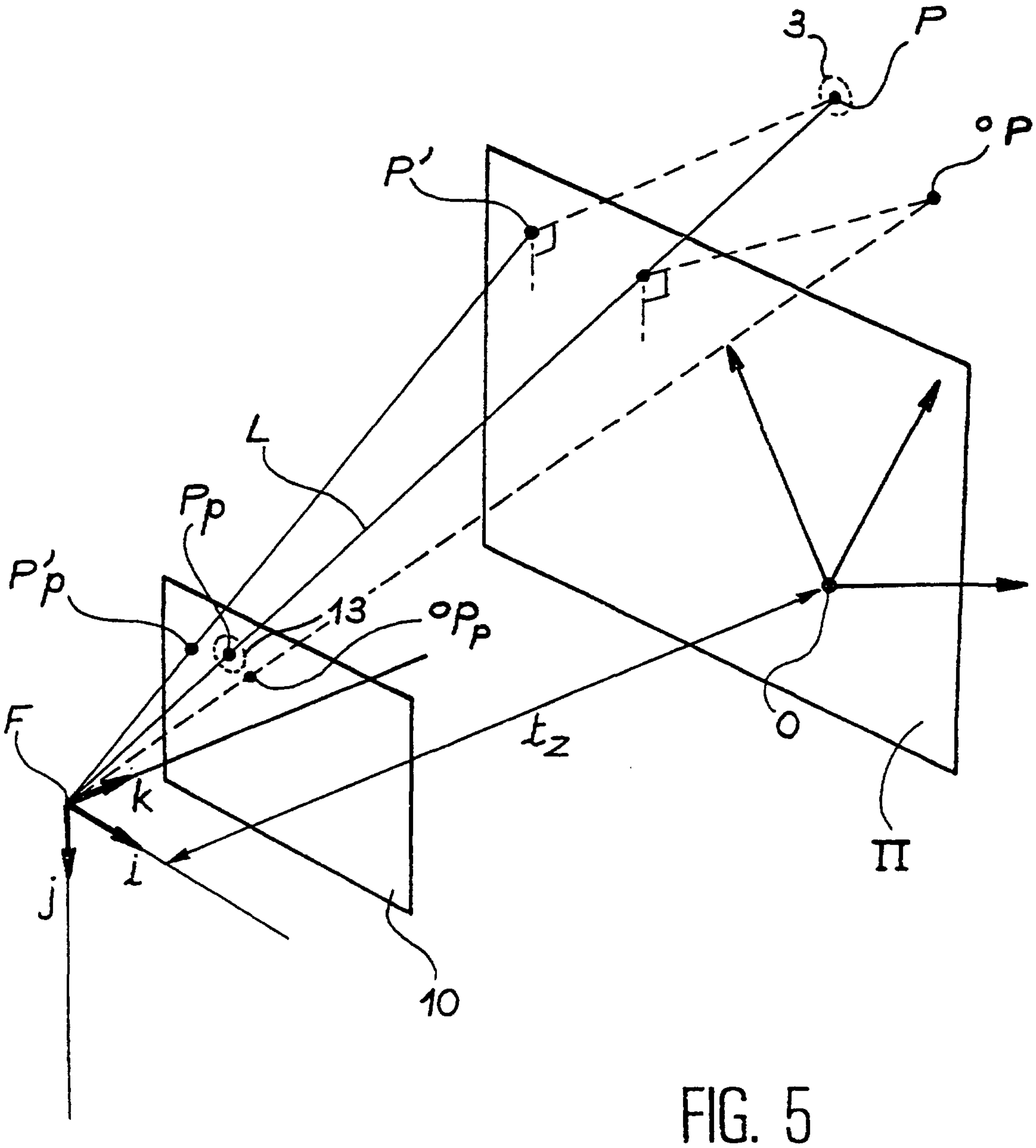


FIG. 5

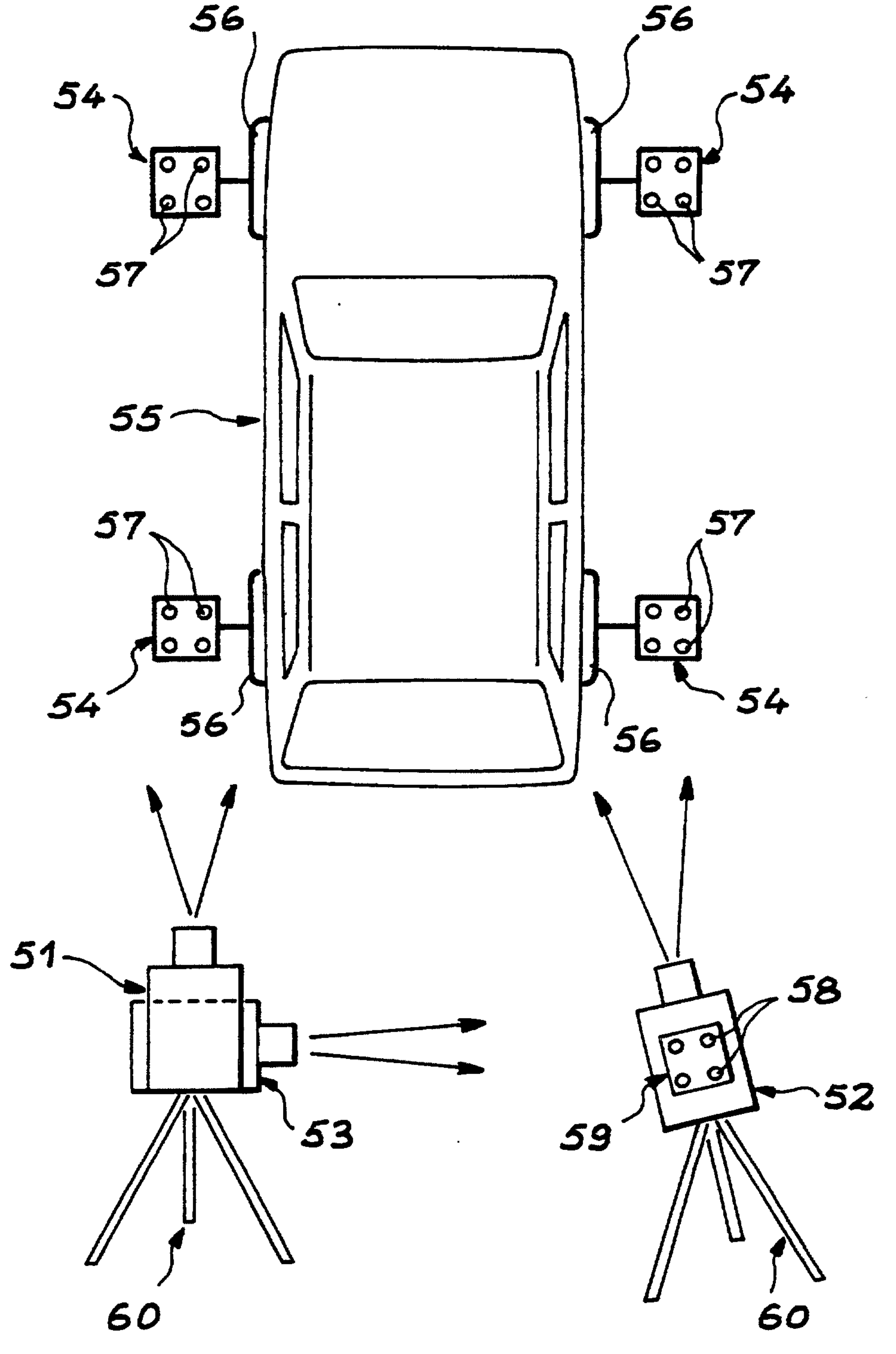


FIG. 6